# FASCICULE DE BREVET EUROPEEN

(11) **EP 3 713 838 B1**
(45) Date de publication et mention de la délivrance du brevet: **08.05.2024**
(21) Numéro de dépôt: 18816179.8
(22) Date de dépôt: 13.11.2018
(51) Int. Cl.: B63B 35/44, F16L 1/15, F16L 1/20, F16L 11/18

(54) **DISPOSITIF POUR POMPER L'EAU EN GRANDE PROFONDEUR**
VORRICHTUNG ZUM PUMPEN VON WASSER AUS GROSSER TIEFE
DEVICE FOR PUMPING WATER FROM A GREAT DEPTH

(30) Priorité: 20.11.2017 FR 1760926
(43) Date de publication de la demande: 30.09.2020
(73) Titulaire: Panipa, 92800 Puteaux (FR); Tacthys, 29280 Plouzané (FR)
(72) Inventeur: THOMAS, Pierre-Armand, 92800 Puteaux (FR)
(74) Mandataire: Cabinet Beau de Loménie
(86) Numéro de dépôt international: PCT/FR2018/052814
(87) Numéro de publication internationale: WO 2019/097151

(56) Documents cités:
- FR-A1- 2 951 802
- US-A1- 2010 275 597
- US-A1- 2012 111 438

## Description

### Arrière-plan de l'invention

La présente invention concerne les dispositifs de pompage en eaux profondes. En particulier, la présente invention concerne les conduites, ou risers, permettant l'acheminement de l'eau depuis les grandes profondeurs jusqu'en surface.

Il est connu actuellement d'utiliser des conduites (ou « riser » en anglais) pour acheminer de l'eau, par exemple de mers ou de lacs, provenant de grandes profondeurs et à basse température, jusqu'à une plateforme ou un bateau. Cette eau à basse température peut alors être utilisée comme source froide dans des systèmes mettant en oeuvre un cycle thermodynamique pour produire, par exemple, de l'énergie. On parle dans ce cas d'« énergie thermique des mers » (ETM). Alternativement, cette eau à basse température peut être utilisée comme liquide de refroidissement pour des installations (de climatisation ou de liquéfaction de gaz naturel par exemple) présentes sur la plateforme ou le bateau.

La conduite doit pouvoir permettre la remontée d'un grand volume d'eau, classiquement plusieurs dizaines, voire centaines, de milliers de mètres-cubes par heure, issu de grandes profondeurs, par exemple plusieurs centaines de mètres. Cette remontée s'effectue à l'aide de moyens de pompage se situant en surface, par exemple des pompes abaissant le niveau de l'eau dans la conduite par rapport au niveau de la mer, ou bien se situant en profondeur dans la conduite.

Il est donc nécessaire de concevoir une conduite présentant un diamètre élevé, par exemple de plusieurs mètres, et pouvant résister : aux efforts générés par la liaison avec le support en surface, aux variations de pressions dynamiques (comme l'effet de houle par exemple), aux actions des courants, aux pressions et/ou dépressions.

Il existe ainsi des conduites métalliques et/ou en matériaux composites, pouvant atteindre des longueurs allant jusqu'à 150 mètres.

Néanmoins, il est actuellement difficile d'envisager de telles conduites avec des longueurs beaucoup plus importantes, pour des raisons de tenue mécanique.

Par ailleurs, l'installation de telles conduites reste également problématique en raison de la longueur desdites conduites qui les rend délicate à manipuler.

Le document FR 2 951 800 concerne une conduite de transport de fluide comprenant une partie tubulaire principale connectée de part et d'autre à un dispositif de tête et un dispositif de pied, la partie tubulaire principale comprenant une pluralité de segments tubulaires le long d'un axe principal et une pluralité de cadres de maintien entre les segments tubulaires consécutifs, la conduite comprenant en outre une pluralité de câbles de maintien disposés parallèlement à l'axe principal et traversant les cadres de maintien.

### Objet et résumé de l'invention

La présente invention vise à résoudre les différents problèmes techniques énoncés précédemment. En particulier, la présente invention vise à proposer un dispositif pour pomper l'eau en grande profondeur, avec une conduite présentant une longueur plus importante que celle des conduites actuelles, et pouvant être installée plus facilement.

Ainsi, selon un aspect, il est proposé un dispositif pour pomper de l'eau en grande profondeur, comprenant d'une part une structure porteuse, par exemple comportant au moins deux, de préférence trois ou plus, moyens longitudinaux tels des câbles, et d'autre part une pluralité d'éléments longitudinaux formant une conduite à l'intérieure de laquelle circule l'eau pompée en grande profondeur, dans lequel les éléments longitudinaux sont montés individuellement de manière solidaire sur la structure porteuse, de préférence par leur extrémité supérieure ou inférieure, et sont reliés entre eux par des moyens d'étanchéité.

Ainsi, selon le dispositif proposé, la conduite est réalisée à partir d'éléments longitudinaux solidarisés individuellement sur une structure porteuse. La conduite n'est donc plus une conduite monobloc formée d'une seule pièce, mais est formée par l'assemblage, via des moyens d'étanchéité, d'une pluralité d'éléments longitudinaux. Afin de limiter les contraintes mécaniques s'appliquant sur les moyens d'étanchéité, mais également sur les éléments longitudinaux eux-mêmes, chaque élément longitudinal est monté de manière solidaire sur la structure porteuse, de sorte que les moyens d'étanchéité n'ont aucune fonction mécanique, ce qui permet de leur conférer une durée de vie et une efficacité plus grande. Grâce à une telle structure, il est alors possible d'obtenir des conduites pouvant mesurer jusqu'à 1000 mètres, voire plus. Par ailleurs, une telle structure est plus facile à installer notamment, puisqu'il est possible de monter successivement, par exemple in situ sur la plateforme ou sur le bateau, les différents éléments longitudinaux sur la structure porteuse au fur et à mesure que celle-ci est immergée.

Préférentiellement, la structure porteuse comprend au moins deux, de préférence trois ou plus, moyens longitudinaux, par exemple des câbles, répartis sur la périphérie des éléments longitudinaux.

La structure porteuse est formée ici de plusieurs câbles, par exemple en acier, répartis sur la périphérie des éléments longitudinaux. Une telle structure porteuse présente l'avantage d'être souple, et donc de pouvoir être par exemple enroulée sur une bobine afin de faciliter son stockage et son transport, tout en ayant les propriétés mécaniques suffisantes pour supporter le poids des différents éléments longitudinaux. Ainsi, lors de l'installation de la conduite, les câbles de la structure porteuse peuvent être déroulés et les éléments longitudinaux de la conduite y être montés au fur et à mesure.

Chaque élément longitudinal comprend un tronçon de conduite et un ensemble de fixation permettant de monter le tronçon de conduite sur la structure porteuse. Chaque élément longitudinal comporte un ensemble de fixation permettant de relier le tronçon de conduite aux câbles de la structure porteuse.

Préférentiellement, le tronçon de conduite est rigide, par exemple formé en alliage d'aluminium, en acier ou bien en matériaux composites. Un tronçon rigide permet de garantir la forme de la conduite, malgré la pression due à la différence de hauteur d'eau créée à l'intérieur de la conduite pour pomper l'eau froide. Il est alors possible de contrôler le débit d'eau circulant dans la conduite avec la dépression appliquée en haut de la conduite. De plus, on obtient également une meilleure tenue mécanique de la conduite dans son ensemble qui peut ainsi mieux résister aux différentes contraintes s'exerçant sur elle. Enfin, avec une structure rigide, le débit d'eau circulant dans la conduite reste constant sur tout le long de la conduite.

Préférentiellement, le tronçon de conduite peut comprendre des moyens de renforcement mécanique, par exemple une ou plusieurs cerces montées sur une surface périphérique extérieure du tronçon de conduite.

Les cerces permettent de réduire l'épaisseur du tronçon de conduite, et donc le poids du tronçon de conduite, tout en ayant toujours les mêmes propriétés mécaniques grâce au renfort des cerces.

Préférentiellement, le tronçon de conduite peut comprendre des moyens d'isolation thermique, par exemple un matériau nanoporeux disposé sur la surface périphérique intérieure ou extérieure du tronçon.

L'ensemble de fixation est monté sur le tronçon de conduite par des premières liaisons pivot, de préférence deux diamétralement opposées sur la périphérie du tronçon de conduite. Les liaisons pivot entre le tronçon et l'ensemble de fixation permettent d'apporter une certaine souplesse à la conduite. En effet, la structure porteuse, formée de câbles, peut se déformer dans une certaine mesure selon les contraintes qu'elle subit, alors que les éléments longitudinaux de la conduite sont rigides. Les liaisons pivot permettent d'apporter un degré de liberté, certes limité, au niveau des jonctions entre éléments longitudinaux adjacents. On peut ainsi obtenir des déviations entre les axes de deux tronçons adjacents, pouvant être de l'ordre de 5°, ce qui reste faible mais qui, compte tenu du nombre d'éléments longitudinaux, peut aboutir à une courbure importante de la conduite dans son ensemble. Une telle liberté, même faible, permet de mieux supporter, voire résister, à certaines des contraintes subies par la conduite.

L'ensemble de fixation comporte un premier élément périphérique avec des moyens de fixation à la structure porteuse, par exemple des serres-câbles et éventuellement des raidisseurs.

Il s'agit ici d'un exemple de fixation des éléments longitudinaux sur la structure porteuse : des serres-câbles permettent ainsi de monter de manière solidaire l'ensemble de fixation de l'élément longitudinal sur les câbles, et les raidisseurs permettent de réduire la courbure des câbles à la sortie des serres-câbles afin de limiter la détérioration des câbles.

L'ensemble de fixation comprend également un deuxième élément périphérique monté entre le tronçon de conduite et le premier élément périphérique, et monté sur le premier élément périphérique par des deuxièmes liaisons pivot, de préférence deux diamétralement opposées, les deuxièmes liaisons pivot entre le premier élément périphérique et le deuxième élément périphérique et les premières liaisons pivot entre le deuxième élément périphérique et le tronçon de conduite étant réparties sur la périphérie du tronçon de conduite.

Dans ce cas, il est prévu deux axes de pivotement du tronçon par rapport à la structure porteuse. Un premier axe est obtenu par deux liaisons pivot montées entre le deuxième élément périphérique et le premier élément périphérique solidaire de la structure porteuse, et un deuxième axe, de préférence perpendiculaire au premier, est obtenu par deux liaisons pivot montées entre le tronçon et le deuxième élément périphérique. On obtient alors un degré de liberté entre deux tronçons adjacents qui est plus important et qui permet une orientation, certes faible, selon n'importe quelle direction de l'espace afin de répondre aux contraintes extérieures qui s'appliquent sur la conduite.

Préférentiellement, l'élément longitudinal comprend également une portion d'extrémité montée sur le tronçon de conduite et dont le diamètre de la surface périphérique intérieure est supérieure au diamètre de la surface périphérique extérieure du tronçon de conduite, la portion d'extrémité s'étendant, longitudinalement, au-delà du tronçon de conduite de manière à pouvoir entourer la surface périphérique extérieure du tronçon d'un élément longitudinal adjacent afin de former, avec ladite surface périphérique extérieure du tronçon de l'élément longitudinal adjacent, deux surfaces d'appui cylindriques en regard l'une de l'autre entre lesquelles sont disposés les moyens d'étanchéité.

Selon ce mode de réalisation, on prévoir que deux tronçons adjacents s'emboîtent en partie l'un dans l'autre. Afin de garder une certaine liberté de pivotement entre lesdits deux tronçons adjacents, l'emboitement entre les deux tronçons ne se fait pas en force mais au contraire avec un jeu important entre les deux surfaces en regard. Toutefois, les deux surfaces en regard peuvent alors former des surfaces d'appui pour les moyens d'étanchéité qui sont alors plus faciles à installer.

Préférentiellement, les moyens d'étanchéité comprennent des lamelles souples et/ou un ou plusieurs joints gonflables à l'eau et/ou un ou plusieurs joints soufflet. Les joints sont prévus pour permettre à la fois une certaine liberté de mouvement des tronçons adjacents entre eux, mais également de résister aux différentes pressions subies au fur et à mesure que la profondeur est importante. A cet effet, plusieurs types de joints peuvent être associés afin de limiter les fuites entre l'intérieur et l'extérieur de la conduite. En effet, de telles fuites conduiraient à réchauffer l'eau acheminée à l'intérieur de la conduite et donc à réduire le rendement du système.

Préférentiellement, le dispositif comprend également un lest monté à une extrémité inférieure de la structure porteuse. Le lest permet d'éviter un relèvement trop important de l'extrémité inférieure de la conduite, afin d'essayer de pomper l'eau à la plus grande profondeur, et donc la plus froide possible.

Préférentiellement, le dispositif comprend également un support sur lequel est retenue la structure porteuse par une extrémité supérieure. Le support peut être une plateforme ou un bateau, ou bien une partie d'une plateforme ou d'un bateau.

Préférentiellement, le support comprend un moyen d'entraînement de la structure porteuse, par exemple au moins deux, voire trois ou plus, treuils de préférence sans déport latéral.

Préférentiellement, le support comprend au moins une pompe en communication fluidique avec l'intérieur de la conduite et débouchant à une distance déterminée sous le niveau de l'eau dans la conduite au repos, par exemple entre 3 et 4 mètres sous le niveau de l'eau au repos.

La pompe permet de faire circuler l'eau à l'intérieur de toute la conduite, en aspirant uniquement la partie en surface. En maintenant une différence de hauteur entre le niveau à l'intérieur de la conduite et le niveau de la mer ou du lac, on obtient automatiquement une circulation de l'eau vers l'intérieur de la conduite, c'est-à-dire une entrée d'eau froide.

Alternativement, le dispositif peut comprendre au moins une pompe montée sur une partie inférieure de la conduite et/ou de la structure porteuse. Dans ce cas, l'eau est entraînée à l'intérieur de la conduite par une pompe située en bas de celle-ci et qui provoque la circulation de l'eau froide vers l'intérieur et vers le haut de la conduite.

Préférentiellement, la conduite présente une longueur supérieure ou égale à 500 mètres, de préférence supérieure ou égale à 750 mètres, de préférence supérieure ou égale à 1000 mètres, et un diamètre intérieur supérieur ou égal à 1 mètre, de préférence supérieur ou égal à 2 mètres, de préférence supérieur ou égal à 4 mètres.

Préférentiellement, la conduite comprend un nombre d'éléments longitudinaux supérieur ou égal à 10, de préférence supérieur ou égal à 25, plus préférentiellement supérieur ou égal à 40.

Selon un autre aspect, il est également proposé un procédé d'installation d'un dispositif tel que décrit précédemment, dans lequel on répète successivement les étapes suivantes : fixation d'un élément longitudinal sur une partie de la structure porteuse, puis déplacement, de préférence vers le bas, de la partie de la structure porteuse avec l'élément longitudinal.

Selon le procédé, il devient possible d'installer facilement une conduite de plusieurs centaines de mètres et rigide, en fixant de manière répétitive, les différents éléments longitudinaux, notamment rigides, de la conduite sur une structure porteuse qui peut être souple et donc déformée et stockée de manière compacte. Ainsi, lorsque la structure porteuse est formée de câbles, celle-ci peut être enroulée sur une ou plusieurs bobines. Il n'y a donc pas, avant assemblage de la conduite, d'élément présentant une longueur similaire à celle de la conduite finale.

Préférentiellement, on répète successivement les étapes suivantes : fixation d'un élément longitudinal sur une partie de la structure porteuse, puis déplacement, de préférence vers le bas, de la partie de la structure porteuse avec l'élément longitudinal, puis positionnement d'un moyen d'étanchéité entre l'élément longitudinal et un autre élément longitudinal adjacent. L'ajout et le positionnement des moyens d'étanchéité entre les différents éléments longitudinaux sont effectués au fur et à mesure de l'installation des éléments longitudinaux sur la structure porteuse. Ainsi, à chaque fixation d'un nouvel élément longitudinal, on vient positionner les moyens d'étanchéité entre ledit élément longitudinal et celui adjacent fixé précédemment.

Préférentiellement, la structure porteuse est déplacée à l'aide de treuils, de préférence deux, trois voire plus, les treuils étant avantageusement verticaux sans déport latéral. Le treuil sans déport latéral permet de faire descendre la structure porteuse à partir du même point, à savoir la poulie de renvoi ou de sortie du treuil. Cela permet ainsi de fixer les différents éléments longitudinaux sur la structure porteuse, à une même place sur le support, sans avoir à se décaler latéralement, pour chaque élément longitudinal, afin de suivre le déplacement latéral du ou des câbles de la structure porteuse lorsque celle-ci est déroulée de la bobine.

### Brève description des dessins

L'invention et ses avantages seront mieux compris à la lecture de la description détaillée d'un mode de réalisation particulier, pris à titre d'exemple nullement limitatif et illustré par les dessins annexés sur lesquels :
- la figure **1** est une vue schématique d'un dispositif de pompage d'eau en grande profondeur selon l'invention,
- la figure **2** est une représentation schématique en coupe de la fixation d'un élément longitudinal sur la structure porteuse et de sa jonction avec l'élément longitudinal adjacent,
- la figure **3** est une représentation schématique en coupe de l'élément longitudinal représenté à la figure **2****,** et
   . la figure **4** illustre les différentes étapes d'un procédé d'installation d'un dispositif tel qu'illustré à la figure **1****.**

### Description détaillée de l'invention

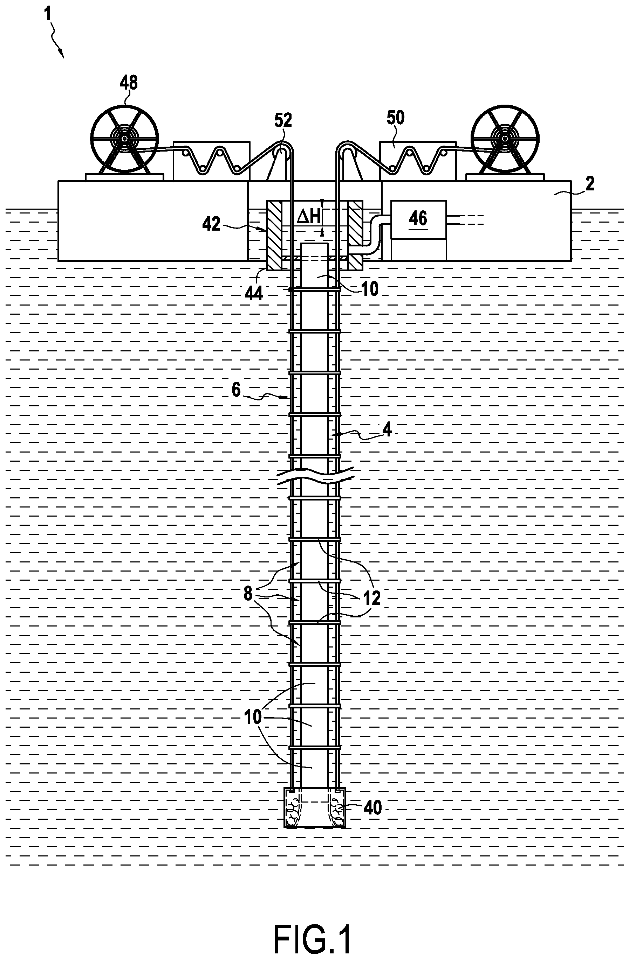

La figure 1 illustre de manière schématique un dispositif 1 de pompage d'eau en grande profondeur selon la présente invention. Le dispositif 1 comprend un support 2 sur lequel est montée une conduite 4 par l'intermédiaire d'une structure porteuse 6. Plus précisément, la conduite 4 est formée d'une pluralité d'éléments longitudinaux 8 comportant chacun un tronçon de conduite 10 et un ensemble de fixation 12. La conduite 4 est donc formée par l'assemblage des différents tronçons de conduite 10 des différents éléments longitudinaux 8.

La structure porteuse 6 peut comprendre un ou plusieurs câbles 11, de préférence trois, voire plus, câbles 11, par exemple en acier, répartis autour de la conduite 4. L'utilisation de câbles permet d'avoir une structure porteuse 6 qui peut être enroulée, par exemple sur une bobine, pour son stockage et son transport : on obtient alors une structure porteuse 6 compacte et facile à manipuler, malgré sa longueur.

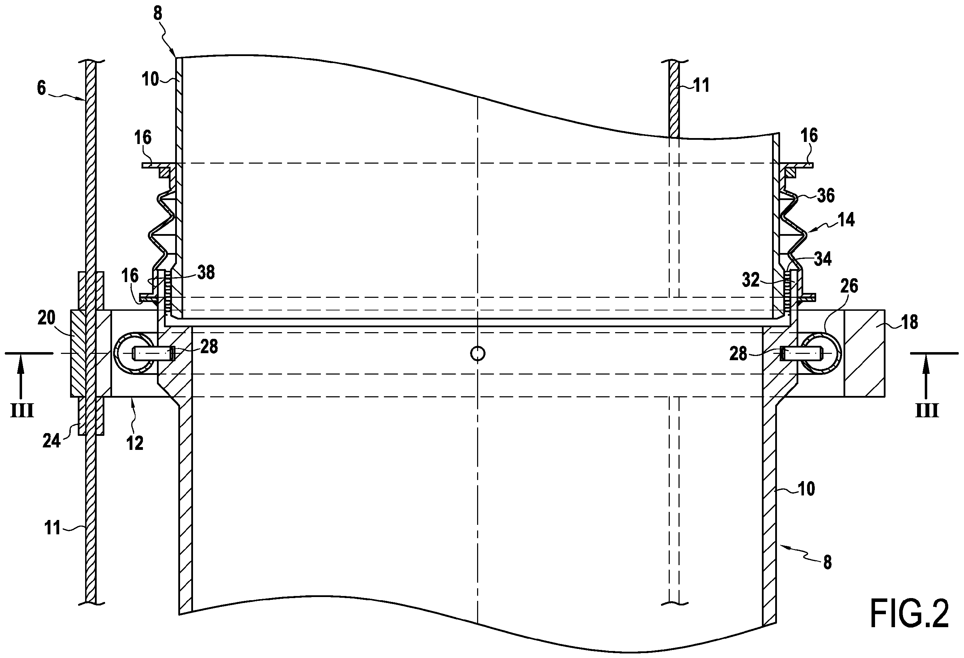

Comme illustré à la figure 2, chaque élément longitudinal 8 comprend un tronçon de conduite 10, par exemple de forme cylindrique, et un ensemble de fixation 12 disposé en partie supérieure du tronçon de conduite 10. Par ailleurs, afin d'assurer l'étanchéité de la conduite 4, les éléments longitudinaux 8 sont reliés entre eux par des moyens d'étanchéité 14.

Le tronçon de conduite 10 est un tronçon rigide, par exemple en matériau composite, en acier ou alliage d'aluminium. De préférence le tronçon 10 est en acier afin de présenter une tenue mécanique élevée pour un poids faible. Afin d'alléger encore plus le tronçon 10, celui-ci pourra comprendre une paroi en acier de plus faible épaisseur renforcée par une ou plusieurs cerces 16 s'étendant sur la surface périphérique extérieure du tronçon 10 et réparties sur la longueur du tronçon 10. Par ailleurs, afin de limiter les pertes thermiques entre l'eau froide circulant à l'intérieur de la conduite 4 et l'eau chaude se trouvant autour de la conduite 4, un ou plusieurs éléments longitudinaux, par exemple ceux se trouvant du côté de la surface de l'eau, peuvent également comprendre un revêtement en matériau isolant thermique, par exemple en matériau nanoporeux. L'eau pompée en grande profondeur peut ainsi rester froide durant sa remontée le long de la conduite 4, ce qui augmente le rendement du cycle thermodynamique dans lequel elle est utilisée.

L'ensemble de fixation 12 permet de fixer l'élément longitudinal 8, et donc le tronçon de conduite 10, sur la structure porteuse 6. Ainsi, le poids de la conduite 4 est porté de manière régulière sur la structure porteuse 6, de sorte à éviter les contraintes de poids entre les différents éléments longitudinaux 8 entre eux, et permettre également, comme cela est décrit ci-dessous, une certaine mobilité des éléments longitudinaux 8 entre eux.

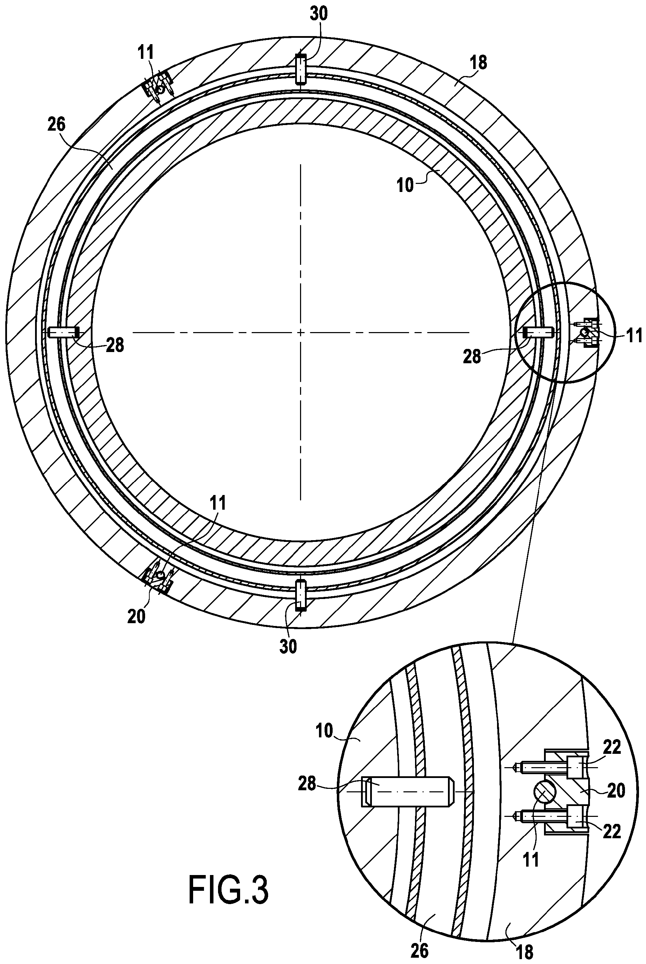

Ainsi, l'ensemble de fixation 12 comprend un premier élément périphérique 18 qui est fixé sur la structure porteuse 6. Le premier élément périphérique 18 peut ainsi présenter une forme annulaire s'étendant autour du tronçon de conduite 10, avec des moyens de fixation à la structure porteuse 6. Les moyens de fixation peuvent par exemple être des encoches configurées pour coopérer avec un serre-câble 20 de manière à venir monter solidairement le premier élément périphérique 18 sur les câbles 11 de la structure porteuse 6 (voir figure 3). Plus précisément, les encoches peuvent comprendre un évidement semi-cylindrique et le serre-câble 20 peut également présenter un évidement semi-cylindrique de manière à ce que, lorsque le serre-câble 20 est monté dans l'encoche, par exemple par des vis 22, on obtient un trou cylindrique dans lequel le câble 11 de la structure porteuse 6 est enserré. Le premier élément périphérique 18 est donc monté de manière solidaire avec la structure porteuse 6.

Des raidisseurs 24 peuvent également être prévus sur le premier élément périphérique 18, dans la continuité des moyens de fixation, afin de limiter la courbure du câble 11 en sortie du moyen de fixation. Ainsi, le raidisseur 24 peut être un élément longiligne, par exemple sous forme de cône, dont une extrémité est montée sur le premier élément périphérique 18 et dont l'autre extrémité est en contact avec le câble 11. Le raidisseur 24 peut se déformer entre ses deux extrémités, mais de manière moins prononcée que le câble 11 de la structure porteuse 6, afin de laisser toujours au câble 11 une certaine souplesse tout en limitant la courbure de celui-ci à proximité immédiate des moyens de fixation. On limite ainsi une dégradation du câble 11.

L'ensemble de fixation 12 peut également comprendre un deuxième élément périphérique 26 monté entre le tronçon de conduite 10 et le premier élément périphérique 18. Le deuxième élément périphérique 26 peut ainsi présenter une forme de tore, par exemple creux, s'étendant autour du tronçon de conduite 10. Le deuxième élément périphérique 26 permet de faire la liaison mécanique entre le tronçon de conduite 10 et le premier élément périphérique 18, tout en autorisant des rotations du tronçon de conduite 10 par rapport au premier élément périphérique 18 selon n'importe quelle direction de l'espace.

A cette fin, le deuxième élément périphérique 26 comprend deux premières liaisons pivot 28 montées selon un premier axe pivot qui est illustré à l'horizontale sur les figures 2 et 3. Les deux premières liaisons pivot 28 sont montées entre le tronçon de conduite 10 et le deuxième élément périphérique 26 : elles permettent d'avoir un degré de liberté en rotation du tronçon 10 par rapport au deuxième élément périphérique 26 selon le premier axe pivot.

Par ailleurs, le deuxième élément périphérique 26 comprend également deux deuxièmes liaisons pivot 30 montées selon un deuxième axe pivot qui est illustré à la verticale sur la figure 3. Les deux deuxièmes liaisons pivot 30 sont montées entre le deuxième élément périphérique 26 et le premier élément périphérique 18, avec un deuxième axe de pivot qui est perpendiculaire au premier axe de pivot tout en restant dans un plan sensiblement perpendiculaire à la direction longitudinale générale de la conduite 4, c'est-à-dire dans le plan du premier élément périphérique 18. Ainsi, les deuxièmes liaisons pivot permettent d'avoir un degré de liberté en rotation du deuxième élément périphérique 26, et donc du tronçon de conduite 10, par rapport au premier élément périphérique 18, selon le deuxième axe pivot.

Il est ainsi possible d'avoir une rotation du tronçon de conduite 10 par rapport au premier élément périphérique 18, selon n'importe quelle direction de l'espace comprise dans le plan du premier élément périphérique. Il est alors possible pour la conduite 4 de se déformer, avec une amplitude malgré tout limitée, selon les contraintes exercées par le courant.

Afin de limiter les pertes thermiques entre les différents éléments longitudinaux 8 entre eux, des moyens d'étanchéité 14 sont disposés entre les tronçons de conduite 10. Par exemple, les éléments longitudinaux 8 peuvent comprendre une portion d'extrémité 32 montée sur le tronçon de conduite 10 et dont le diamètre de la surface périphérique intérieure est supérieure au diamètre de la surface périphérique extérieure du tronçon de conduite 10. La portion d'extrémité s'étend, longitudinalement, au-delà du tronçon de conduite 10 de manière à pouvoir entourer la surface périphérique extérieure du tronçon 10 d'un élément longitudinal 8 adjacent. La surface périphérique intérieure de la portion d'extrémité 32 et la surface périphérique extérieure du tronçon 10 adjacent forment deux surfaces cylindriques en regard l'une de l'autre entre lesquelles peuvent être montés des joints d'étanchéité, par exemple des lamelles souples 34. Les lamelles souples permettent de limiter la circulation d'eau entre l'intérieur et l'extérieur de la conduite 4, tout en permettant aux deux tronçons de conduite 10 adjacents d'avoir un certain degré de liberté en rotation l'un par rapport à l'autre. En particulier, le tronçon de conduite 10 supérieur n'est pas monté en force dans la portion d'extrémité 32 de l'élément longitudinal 8 inférieur.

Par ailleurs, les moyens d'étanchéité 14 peuvent également comprendre des joints soufflet 36, dont une extrémité est montée sur la partie inférieure d'un tronçon de conduite 10, par exemple via une cerce 16, et dont l'autre extrémité est solidaire d'une butée périphérique 38. Lors de l'installation de la conduite, une fois le tronçon de conduite positionné, on laisse la butée périphérique 38 du joint soufflet 36 tomber sur une cerce 16 d'un tronçon 10 inférieur, puis on fixe la butée 38 sur ladite cerce 16.

On obtient ainsi une conduite 4 qui peut être particulièrement longue, tout en ayant un diamètre fixe grâce aux tronçons de conduite 10 rigides.

A son extrémité inférieure, le dispositif 1 comprend également un lest 40. Le lest 40 présente une forme générale de cylindre creux. Le cylindre creux est fermé à son extrémité inférieure et ouvert à son extrémité supérieure de manière à pouvoir y mettre plus ou moins d'éléments de lestage selon la configuration du dispositif. Le lest 40 est monté sur le dispositif 1 grâce aux câbles 11 de la structure porteuse 6 qui sont fixés à l'extrémité supérieure du cylindre creux. Le lest permet donc bien de tendre la structure porteuse 6 afin de pomper l'eau à la plus grande profondeur possible.

L'extrémité inférieure du lest 40 peut par ailleurs présenter une épaisseur plus fine, afin de faciliter l'écoulement de l'eau froide vers l'intérieur de la conduite 4.

A son extrémité supérieure, le dispositif 1 comprend également une tête de conduite 42. La tête de conduite 42 permet la liaison entre la conduite 4 et le support 2 dans lequel est pompée l'eau froide. La tête de conduite comprend ainsi un tronçon de conduite 10 et un ensemble de fixation 12 qui n'est pas forcément disposé à une des extrémités du tronçon 10 mais qui permet de fixer le tronçon 10 à la structure porteuse 6 comme les tronçons des éléments longitudinaux 8.

Par ailleurs, la tête de conduite 42 comprend également une zone de pompage 44 pouvant se présenter sous la forme d'un cylindre creux dont le diamètre intérieur correspond au diamètre extérieur de l'ensemble de fixation 12 de la tête de conduite 42. En particulier, l'ensemble de fixation 12 vient se positionner de manière étanche dans la zone de pompage 44, afin d'empêcher l'eau entourant la tête de conduite 42, de s'infiltrer dans la zone de pompage 44.

La zone de pompage 44 s'étend au-dessus de l'extrémité supérieure du tronçon 10 et au-dessus du niveau de l'eau au repos. On évite ainsi que de l'eau ne rentre dans la zone de pompage 44 par le dessus, par exemple sous l'effet de la houle.

A l'intérieur, la zone de pompage 44 comprend également une ouverture de liaison avec des moyens de pompage 46. L'ouverture de liaison est disposée au-dessus de l'ensemble de fixation 12 et en-dessous du niveau de l'eau au repos. La distance entre l'ouverture de liaison et le niveau de la mer définit la différence de hauteur ΔH maximale pouvant être obtenue lors du pompage de l'eau sortant de la conduite 4 dans la zone de pompage 44. Une fois l'eau froide pompée par les moyens de pompage 46, celle-ci est envoyée dans le cycle thermodynamique en tant que source froide, tandis que la différence de hauteur créée par les moyens de pompage 46 dans la zone de pompage 44 entraîne la circulation de l'eau sur toute la hauteur de la conduite 4, afin de continuer d'alimenter la zone de pompage 44 en eaux froides.

La conduite 4, avec son lest 40 et sa tête de conduite 44, sont montés sur le support 2 qui soutient la structure porteuse 6. Plus particulièrement, les câbles 11 de la structure porteuse 6 sont déroulés de bobines 48 disposées sur le support 2 et entraînés par des treuils 50, en particulier des treuils verticaux sans déport latéral, jusqu'à une poulie de renvoi 52. De tels treuils sont connus et notamment commercialisés par la société Imeca. Les treuils 50 verticaux sans déport latéral permettent d'utiliser en aval des poulies de renvoi 52 qui sont fixes sur le support, et qui peuvent donc faire descendre la structure porteuse 6 à partir du même point. Une telle configuration facilite notamment l'installation de la conduite 4 comme cela est décrit plus bas.

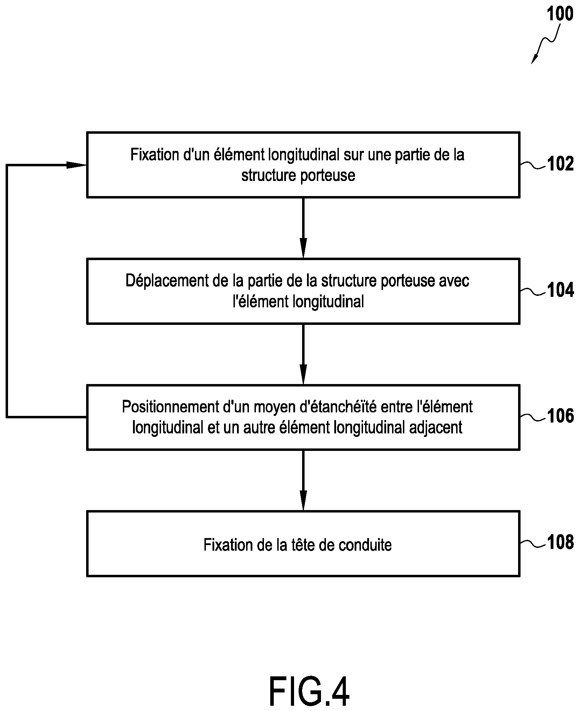

La figure 4 illustre les différentes étapes d'un procédé 100 d'installation d'un dispositif tel que décrit précédemment, qui peut être mis en oeuvre directement sur le support 2. Dans une première étape 102, on fixe un élément longitudinal 8 sur la structure porteuse 6, puis dans une deuxième étape 104, on déplace, vers le bas de préférence, la partie de la structure porteuse 6 avec ledit élément longitudinal 8 fixé dessus. Enfin, dans une troisième étape 106, on positionne un moyen d'étanchéité entre l'élément longitudinal et un autre élément longitudinal adjacent. Les trois étapes 102, 104 et 106 du procédé d'installation 100 sont ainsi répétées aussi souvent qu'il y a d'éléments longitudinaux 8 dans le dispositif 1. Lorsque les éléments longitudinaux 8 ont tous été fixés sur la structure porteuse 6, on passe alors à la quatrième étape 108 pendant laquelle on fixe la tête de conduite 42.

On obtient alors de manière simple et rapide une conduite de pompage d'eau froide en grande profondeur pouvant mesurer plusieurs centaines de mètres de long. En particulier, le dispositif décrit est facile à installer, et permet de contrôler le débit d'eau froide par les moyens de pompage, grâce au diamètre constant de la conduite.

## Revendications

1. Dispositif (1) pour pomper de l'eau en grande profondeur, comprenant une structure porteuse (6) , par exemple comportant au moins deux, de préférence trois ou plus, câbles, et une pluralité d'éléments longitudinaux (8) formant une conduite (4) à l'intérieure de laquelle circule l'eau pompée en grande profondeur, dans lequel les éléments longitudinaux (8) sont montés individuellement de manière solidaire sur la structure porteuse (2) et sont reliés entre eux par des moyens d'étanchéité (14), dans lequel chaque élément longitudinal (8) comprend un tronçon de conduite (10) et un ensemble de fixation (12) permettant de monter le tronçon de conduite (10) sur la structure porteuse (6),
dans lequel l'ensemble de fixation (12) est monté sur le tronçon de conduite (10) par des premières liaisons pivot (28), et/ou dans lequel l'ensemble de fixation (12) comporte un premier élément périphérique (18) avec des moyens de fixation à la structure porteuse, et un deuxième élément périphérique (26) monté entre le tronçon de conduite (10) et le premier élément périphérique (18), le deuxième élément périphérique (26) étant monté sur le premier élément périphérique (18) par des deuxièmes liaisons pivot (30), et dans lequel les deuxièmes liaisons pivot (30) entre le premier élément périphérique (18) et le deuxième élément périphérique (26) et les premières liaisons pivot (28) entre le deuxième élément périphérique (26) et le tronçon de conduite (10) sont réparties sur la périphérie du tronçon de conduite (10).

2. Dispositif (1) selon la revendication 1, dans lequel les éléments longitudinaux (8) sont montés individuellement de manière solidaire sur la structure porteuse (2) par leur extrémité supérieure ou inférieure.

3. Dispositif (1) selon la revendication 1 ou 2, dans lequel le tronçon de conduite (10) est rigide, par exemple formé en alliage d'aluminium, en acier ou bien en matériaux composites.

4. Dispositif (1) selon l'une quelconque des revendications précédentes, dans lequel l'ensemble de fixation (12) est monté sur le tronçon de conduite (10) par deux premières liaisons pivot (28) diamétralement opposées sur la périphérie du tronçon de conduite et/ou dans lequel le deuxième élément périphérique (26) est monté sur le premier élément périphérique (18) par deux deuxièmes liaisons pivot (30) diamétralement opposées.

5. Dispositif (1) selon l'une quelconque des revendications précédentes, dans lequel les moyens de fixation à la structure porteuse sont des serres-câbles (20) et éventuellement des raidisseurs (24).

6. Dispositif (10) selon l'une quelconque des revendications précédentes, dans lequel l'élément longitudinal (8) comprend également une portion d'extrémité (32) montée sur le tronçon de conduite (10) et dont le diamètre de la surface périphérique intérieure est supérieure au diamètre de la surface périphérique extérieure du tronçon de conduite (10), la portion d'extrémité s'étendant, longitudinalement, au-delà du tronçon de conduite (10) de manière à pouvoir entourer la surface périphérique extérieure du tronçon d'un élément longitudinal (8) adjacent afin de former, avec ladite surface périphérique extérieure du tronçon de l'élément longitudinal adjacent, deux surfaces d'appui en regard l'une de l'autre entre lesquelles sont disposés les moyens d'étanchéité (14).

7. Dispositif (1) selon l'une quelconque des revendications précédentes, dans lequel les moyens d'étanchéité (14) comprennent des lamelles souples (34) et/ou un ou plusieurs joints gonflables à l'eau et/ou un ou plusieurs joints soufflet (36).

8. Dispositif (1) selon l'une quelconque des revendications précédentes, comprenant également un support (2) sur lequel est retenue la structure porteuse (6) par une extrémité supérieure, et comportant un moyen d'entraînement (50) de la structure porteuse (6), par exemple des treuils et de préférence des treuils sans déport latéral, dans lequel le support comporte également au moins une pompe (46) en communication fluidique avec l'intérieur de la conduite (4) et débouchant à une distance déterminée sous le niveau de l'eau dans la conduite au repos, par exemple entre 3 et 4 mètres sous le niveau de l'eau au repos, ou bien dans lequel le dispositif (1) comporte au moins une pompe montée sur une partie inférieure de la conduite (4) et/ou de la structure porteuse (6).

9. Procédé d'installation (100) d'un dispositif (1) selon l'une quelconque des revendications précédentes, dans lequel on répète successivement les étapes suivantes : fixation (102) d'un élément longitudinal sur une partie de la structure porteuse, puis déplacement (104), de préférence vers le bas, de la partie de la structure porteuse avec l'élément longitudinal, puis éventuellement positionnement (106) d'un moyen d'étanchéité entre l'élément longitudinal et un autre élément longitudinal adjacent.

## Patentansprüche

1. Vorrichtung (1) zum Pumpen von Wasser aus großer Tiefe, die eine Tragstruktur (6), die zum Beispiel mindestens zwei, vorzugsweise drei oder mehr, Seile beinhaltet, und mehrere Längselemente (8) umfasst, die eine Leitung (4) bilden, in deren Inneren das aus großer Tiefe gepumpte Wasser umläuft, wobei die Längselemente (8) einzeln auf fest verbundene Weise an der Tragstruktur (2) montiert sind und untereinander durch Dichtungsmittel (14) verbunden sind, wobei jedes Längselement (8) ein Leitungsteilstück (10) und eine Befestigungsanordnung (12) umfasst, die das Montieren des Leitungsteilstücks (10) an der Tragstruktur (6) ermöglicht,
wobei die Befestigungsanordnung (12) an dem Leitungsteilstück (10) durch erste Schwenkverbindungen (28) montiert ist und/oder wobei die Befestigungsanordnung (12) ein erstes Umfangselement (18) mit Mitteln zur Befestigung an der Tragstruktur und ein zweites Umfangselement (26) beinhaltet, das zwischen dem Leitungsteilstück (10) und dem ersten Umfangselement (18) montiert ist, wobei das zweite Umfangselement (26) an dem ersten Umfangselement (18) durch zweite Schwenkverbindungen (30) montiert ist und wobei die zweiten Schwenkverbindungen (30) zwischen dem ersten Umfangselement (18) und dem zweiten Umfangselement (26) und die ersten Schwenkverbindungen (28) zwischen dem zweiten Umfangselement (26) und dem Leitungsteilstück (10) auf dem Umfang des Leitungsteilstücks (10) verteilt sind.

2. Vorrichtung (1) nach Anspruch 1, wobei die Längselemente (8) einzeln auf fest verbundene Weise über ihr oberes oder unteres Ende an der Tragstruktur (2) montiert sind.

3. Vorrichtung (1) nach Anspruch 1 oder 2, wobei das Leitungsteilstück (10) starr ist und zum Beispiel aus Aluminiumlegierung, aus Stahl oder auch aus Verbundwerkstoffen gebildet ist.

4. Vorrichtung (1) nach einem der vorhergehenden Ansprüche, wobei die Befestigungsanordnung (12) an dem Leitungsteilstück (10) durch zwei erste Schwenkverbindungen (28) montiert ist, die auf dem Umfang des Leitungsteilstücks diametral entgegengesetzt sind, und/oder wobei das zweite Umfangselement (26) an dem ersten Umfangselement (18) durch zwei zweite diametral entgegengesetzte Schwenkverbindungen (30) montiert ist.

5. Vorrichtung (1) nach einem der vorhergehenden Ansprüche, wobei die Mittel zur Befestigung an der Tragstruktur Seilklemmen (20) und gegebenenfalls Versteifungen (24) sind.

6. Vorrichtung (10) nach einem der vorhergehenden Ansprüche, wobei das Längselement (8) auch einen Endabschnitt (32) umfasst, der an dem Leitungsteilstück (10) montiert ist und bei dem der Durchmesser der inneren Umfangsoberfläche größer als der Durchmesser der äußeren Umfangsoberfläche des Leitungsteilstücks (10) ist, wobei der Endabschnitt sich derart in Längsrichtung über das Leitungsteilstück (10) hinaus erstreckt, dass er die äußere Umfangsoberfläche des Teilstücks eines benachbarten Längselements (8) umgeben kann, um mit der äußeren Umfangsoberfläche des Teilstücks des benachbarten Längselements zwei einander gegenüberliegende Auflageoberflächen zu bilden, zwischen denen die Dichtungsmittel (14) angeordnet sind.

7. Vorrichtung (1) nach einem der vorhergehenden Ansprüche, wobei die Dichtungsmittel (14) biegsame Lamellen (34) und/oder eine oder mehrere mit Wasser aufquellbare Dichtungen und/oder eine oder mehrere Balgdichtungen (36) umfassen.

8. Vorrichtung (1) nach einem der vorhergehenden Ansprüche, die auch eine Stütze (2) umfasst, an der die Tragstruktur (6) durch ein oberes Ende zurückgehalten wird, und ein Mittel (50) zur Mitnahme der Tragstruktur (6) beinhaltet, zum Beispiel Winden und vorzugsweise Winden ohne seitliche Verschiebung, wobei die Stütze auch mindestens eine Pumpe (46) beinhaltet, die in Fluidverbindung mit dem Inneren der Leitung (4) steht und in einem bestimmten Abstand unter dem Wasserpegel in der Leitung im Ruhezustand, zum Beispiel zwischen 3 und 4 Meter unter dem Wasserpegel im Ruhezustand, mündet, oder wobei die Vorrichtung (1) mindestens eine Pumpe beinhaltet, die an einem unteren Teil der Leitung (4) und/oder der Tragstruktur (6) montiert ist.

9. Verfahren (100) zur Installation einer Vorrichtung (1) nach einem der vorhergehenden Ansprüche, wobei die folgenden Schritte aufeinanderfolgend wiederholt werden: Befestigen (102) eines Längselements an einem Teil der Tragstruktur, dann Verlagern (104) des Teils der Tragstruktur mit dem Längselement, vorzugsweise nach unten, dann gegebenenfalls Positionieren (106) eines Dichtungsmittels zwischen dem Längselement und einem anderen, benachbarten Längselement.

## Claims

1. A device (1) for pumping water from a great depth, comprising a support structure (6), for example comprising at least two, preferably three or more, cables, and a plurality of longitudinal elements (8) forming a pipe (4) inside which circulates water pumped from a great depth, in which the longitudinal elements (8) are individually mounted in a secure manner on the support structure (2) and are connected together by sealing means (14), wherein each longitudinal element (8) comprises a pipe section (10) and an attachment assembly (12) allowing mounting the pipe section (10) on the support structure (6), wherein the attachment assembly (12) is mounted on the pipe section (10) by first pivot connections (28), and/or wherein the attachment assembly (12) includes a first peripheral element (18) with means for attachment to the support structure, and a second peripheral element (26) mounted between the pipe section (10) and the first peripheral element (18), the second peripheral element (26) being mounted on the first peripheral element (18) by second pivot connections (30), and wherein the second pivot connections (30) between the first peripheral element (18) and the second peripheral element (26) and the first pivot connections (28) between the second peripheral element (26) and the pipe section (10) are distributed on the periphery of the pipe section (10).

2. The device (1) according to claim 1, wherein the longitudinal elements (8) are individually mounted in a secure manner on the support structure (2) by their upper or lower end.

3. The device (1) according to claim 1 or 2, wherein the pipe section (10) is rigid, formed for example from aluminum alloy, from steel or even from composite materials.

4. The device (1) according to any one of the preceding claims, wherein the attachment assembly (12) is mounted on the pipe section (10) by two first pivot connections (28) diametrically opposed on the periphery of the pipe section, and/or wherein the second peripheral element (26) is mounted on the first peripheral element (18) by two diametrically opposed second pivot connections (30).

5. The device (1) according to any one of the preceding claims, wherein the means for attachment to the support structure are cable ties (20) and possibly stiffeners (24).

6. The device (10) according to any one of the preceding claims, wherein the longitudinal element (8) also comprises an end portion (32) mounted on the pipe section (10) and the diameter of the inner peripheral surface of which is greater than the diameter of the outer peripheral surface of the pipe section (10), the end portion extending longitudinally beyond the pipe section (10) so as to be able to surround the outer peripheral surface of the section of an adjacent longitudinal element (8) in order to form, with said outer peripheral surface of the section of the adjacent longitudinal element, two support surfaces facing one another between which are positioned the sealing means (14).

7. The device (1) according to any one of the preceding claims, wherein the sealing means (14) comprise flexible slats (34) and/or one or more seals inflatable with water and/or one or more bellows seals (36).

8. The device (1) according to any one of the preceding claims, also comprising a support (2) on which the support structure (6) is retained by an upper end, and including a drive means (50) of the support structure (6), for example winches and preferably winches without lateral offset, wherein the support also includes at least one pump (46) in fluid communication with the inside of the pipe (4) and opening into the pipe at a predetermined distance below the water level at rest, for example between 3 and 4 meters below the water level at rest, or wherein the device (1) includes at least one pump mounted on a lower portion of the pipe (4) and/or of the support structure (6).

9. An installation method (100) of a device (1) according to any one of the preceding claims, wherein the following steps are repeated successively: attaching (102) a longitudinal element to a portion of the support structure, then moving (104), preferably downward, the portion of the support structure with the longitudinal element, then possibly positioning (106) a sealing means between the longitudinal element and another adjacent longitudinal element.
